(19) Europäisches Patentamt

European Patent Office

Office européen des brevets

(11) **EP 4 400 234 A1**

(12) **EUROPEAN PATENT APPLICATION**

(43) Date of publication:
**17.07.2024 Bulletin 2024/29**

(21) Application number: **23210824.1**

(22) Date of filing: **20.11.2023**

(51) International Patent Classification (IPC):
*B22F 10/28* (2021.01)     *B29C 64/00* (2017.01)
*B22F 10/31* (2021.01)     *B22F 12/44* (2021.01)
*B22F 12/90* (2021.01)     *B23K 26/34* (2014.01)
*B29C 64/153* (2017.01)     *B33Y 10/00* (2015.01)
*B33Y 50/02* (2015.01)     *B33Y 80/00* (2015.01)

(52) Cooperative Patent Classification (CPC):
(C-Sets available)
**B33Y 80/00; B22F 10/28; B22F 10/31; B22F 12/44;
B22F 12/90; B29C 64/153; B33Y 10/00;
B33Y 50/02;** B22F 2999/00; B23K 26/342     (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.11.2022 US 202217994782**

(71) Applicant: **Concept Laser GmbH
96215 Lichtenfels (DE)**

(72) Inventor: **Dicken, Christian
96215 Lichtenfels (DE)**

(74) Representative: **Hafner & Kohl PartmbB
Schleiermacherstraße 25
90491 Nürnberg (DE)**

(54) **METHODS AND SYSTEMS FOR CALIBRATING AN ADDITIVE MANUFACTURING MACHINE**

(57)     A method (500) of calibrating an additive manufacturing machine (102) includes detecting a reflected beam (218) becoming incident upon a detection device (206), the reflected beam (218) comprising a portion of a calibration beam (208) having been reflected by a reflective surface (216) of a calibration substrate (214); and determining an alignment of the reflected beam (218) and/or the calibration beam (208) with an optical axis (300) based at least in part on detecting the reflected beam (218) becoming incident upon the detection device (206); wherein, the reflected beam (218) becomes incident upon a fiber end (207) of an optical fiber (204) and propagates through the optical fiber (204) prior to becoming incident upon the detection device (206), the optical fiber (204) defining a portion of a detection path (222) from the reflective surface (216) to the detection device (206).

FIG. 1

EP 4 400 234 A1

(52)  Cooperative Patent Classification (CPC): (Cont.)

C-Sets
B22F 2999/00, B22F 10/31, B22F 12/49,
B22F 12/90

## Description

FIELD

The present disclosure generally pertains to additive manufacturing machines and systems, systems and methods for calibrating certain aspects of an additive manufacturing machine, as well as systems and methods of additively manufacturing three-dimensional objects using an additive manufacturing machine.

BACKGROUND

Three-dimensional objects may be additively manufactured using an additive manufacturing machine. The additive manufacturing machine may perform a powder bed fusion process in which an energy beam system directs one or more energy beams onto a powder bed to consolidate (e.g., melt and/or sinter) sequential layers of powder material. The properties of the three-dimensional objects formed by consolidating the powder material may depend at least in part on having a good calibration for the additive manufacturing machine and/or for the energy beam system thereof. Accordingly, it would be welcomed in the art to provide improved systems and methods for calibrating an additive manufacturing machine.

BRIEF DESCRIPTION OF THE DRAWINGS

A full and enabling disclosure, including the best mode thereof, directed to one of ordinary skill in the art, is set forth in the specification, which makes reference to the appended figures, in which:

FIG. 1 schematically depicts an exemplary additive manufacturing system or machine;

FIGs. 2A and 2B schematically depicts aspects of an additive manufacturing machine that define an exemplary calibration system;

FIGs. 3A and 3B schematically depict further aspects of an exemplary calibration system;

FIG. 4 schematically depicts an exemplary calibration module;

FIG. 5 shows a flowchart depicting an exemplary method of calibrating an additive manufacturing machine; and

FIG. 6 schematically depicts an exemplary control system associated with the present disclosure.

DETAILED DESCRIPTION

Reference will now be made in detail to embodiments of the present disclosure, one or more examples of which are illustrated in the accompanying figures. The embodiments illustrated in the figures and described in the specification are provided by way of example and not to limit the present disclosure.

The present disclosure uses numerical and letter designations to refer to features in the figures. Like or similar designations in the drawings and description have been used to refer to like or similar parts of the disclosure. Letter designations (e.g., "a," "b," etc.) following a numerical designation respectively refer to a sequential instance of the element identified by the numerical designation, while otherwise referring to the same or similar element identified by the numerical designation without such a letter designation.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a," "an," and "the" include plural references unless the context clearly dictates otherwise.

The term "at least one of" in the context of, e.g., "at least one of A, B, or C" refers to only A, only B, only C, or any combination of A, B, and C.

As used herein, the terms "first," "second," and "third" may be used interchangeably to distinguish one component from another and are not intended to signify location or importance of the individual components.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

The present disclosure generally provides additive manufacturing machines and systems, systems and methods for calibrating certain aspects of an additive manufacturing machine, as well as systems and methods of additively manufacturing three-dimensional objects using an additive manufacturing machine. The presently disclosed systems and methods may provide for improved alignment of an energy beam system. Additionally, or in the alternative, presently disclosed systems and methods may provide for improved material properties of additively manufactured three-dimensional objects, for example, as a result of improved alignment of the energy beam system.

The presently disclosed additive manufacturing machines may include a beam path that has an optical fiber through which a calibration beam may be emitted. The calibration beam may become incident upon a calibration substrate that includes a reflective surface, and a reflected beam that includes a portion of the calibration beam having been reflected by the reflective surface may propagate along a detection path to a detection device. The detection path may include the optical fiber. When the reflected beam and/or the calibration beam are aligned with an optical axis, the reflected beam may become incident upon a fiber end of the optical fiber, such that the reflected beam may propagate through the optical fiber to a detection device. Additionally, or in the alternative, the reflected beam may miss the fiber end of the optical fiber when and/or to the extent that the reflected beam and/or the calibration beam is misaligned with respect to the optical axis. The calibration beam may be directed onto the reflective surface of the calibration substrate by a deflecting element. The deflecting element may be moved to a position that causes the reflected beam to become incident upon the fiber end of the optical fiber. A calibration operation may be performed based at least in part on the alignment of the reflected beam and/or the calibration beam with an optical axis. For example, the calibration operation may include adjusting a position of the deflecting element, such as to compensate for a misalignment of the reflected beam and/or the calibration beam with respect to the optical axis.

In some embodiments, the deflecting element may be oriented to a plurality of positions and the reflected beam becoming incident upon the detection device may be determined for at least one of the plurality of positions. For example, whether the reflected beam becomes incident upon the detection device may be determined for respective ones of the plurality of positions. In some embodiments, an intensity of a signal from the detection device may be determined for respective ones of the plurality of positions. An alignment of the reflected beam and/or the calibration beam with the optical axis may be determined based at least in part on the intensity of the signal from the detection device for the respective ones of the plurality of positions. In some embodiments, the alignment of the reflected beam and/or the calibration beam with the optical axis may be determined based at least in part on a weighted centroid corresponding to a plurality of data points for the signal from the detection device.

As used herein, the term "additive manufacturing" refers generally to manufacturing technology in which components are manufactured in a layer-by-layer manner. An exemplary additive manufacturing machine may utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more additively manufactured three-dimensional objects. Additively manufactured objects are generally monolithic in nature and may have a variety of integral subcomponents.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 $\mu$m and 200 $\mu$m, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

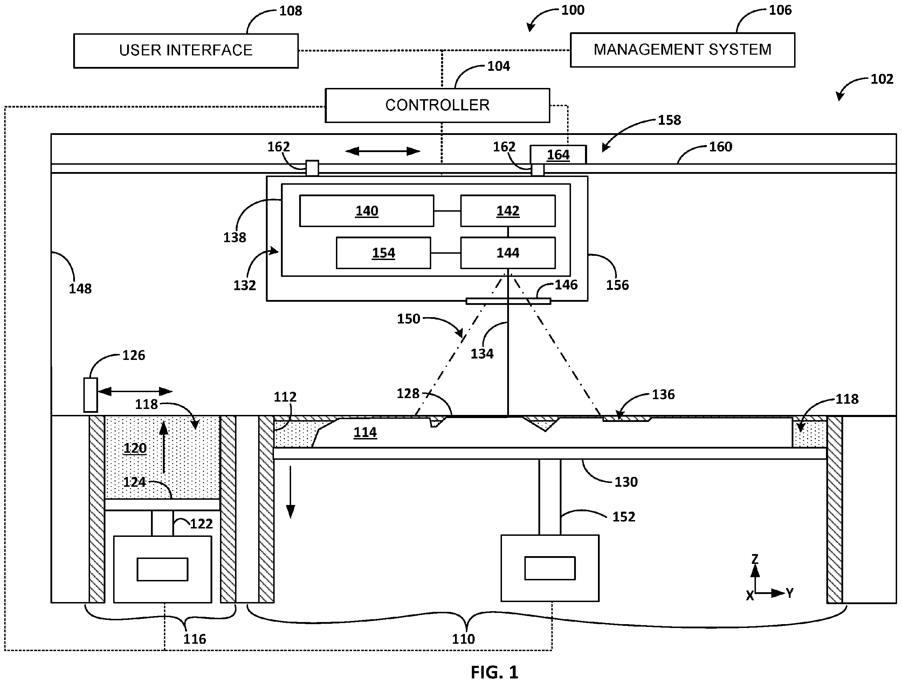

Referring now to FIG. 1, the presently disclosed subject matter will now be described in further detail. FIG. 1 schematically depicts an exemplary additive manufacturing system 100. The additive manufacturing system 100 may include one or more additive manufacturing machines 102. It will be appreciated that the additive manufacturing system 100 and additive manufacturing machine 102 shown in FIG. 1 are provided by way of example and not to be limiting. In fact, the subject matter of the present disclosure may be practiced with any suitable additive manufacturing system 100 and/or additive manufacturing machine 102 without departing from the scope of the present disclosure. As shown, the one or more additive manufacturing machines 102 may include a control system 104. A control system 104 may associated with one or more additive manufacturing machines 102. The control system 104 may include componentry integrated as part of the additive manufacturing machine 102 and/or componentry that is provided separately from the additive manufacturing machine 102. Various componentry of the control system 104 may be communicatively coupled to various componentry of the additive manufacturing machine 102.

The control system 104 may be communicatively coupled with a management system 106 and/or a user interface 108. The management system 106 interact with the control system 104 in connection with enterprise-level operations pertaining to the additive manufacturing system 100. Such enterprise level operations may include transmitting data from the management system 106 to the control system 104 and/or transmitting data from the control system 104 to the management system 106. The user interface 108 may include one or more user input/output devices to allow a user to interact with the additive manufacturing system 100.

As shown, an additive manufacturing machine 102 may include a build module 110 that includes a build chamber 112 within which an object or objects 114 may be additively manufactured. An additive manufacturing machine 102 may include a powder module 116 that contains a supply of powder material 118 housed within a supply chamber 120. The build module 110 and/or the powder module 116 may be provided in the form of modular containers configured to be installed into and removed from the additive manufacturing machine 102 such as in an assembly-line process. Additionally, or in the alternative, the build module 110 and/or the powder module 116 may define a fixed componentry of the additive manufacturing machine 102.

The powder module 116 contains a supply of powder material 118 housed within a supply chamber 120. The powder module 116 includes a powder piston 122 that elevates a powder floor 124 during operation of the additive manufacturing machine 102. As the powder floor 124 elevates, a portion of the powder material 118 is forced out of the powder module 116. A recoater 126 such as a blade or roller sequentially distributes thin layers of powder material 118 across a build plane 128 above the build module 110. A build platform 130 supports the sequential layers of powder material 118 distributed across the build plane 128. A build platform 130 may include a build plate (not shown) secured thereto and upon which an object 114 may be additively manufactured.

The additive manufacturing machine 102 includes an energy beam system 132 configured to generate one or more of energy beams 134 and to direct the respective energy beams 134 onto the build plane 128 to selectively solidify respective portions of the powder bed 136 defining the build plane 128. The one or more energy beams 134 may be laser beams or beams from any other suitable energy source, such as LEDs or other light sources, and so forth. As a respective energy beam 134 selectively consolidate (e.g., melt or fuse) the sequential layers of powder material 118 that define the powder bed 136, the object 114 begins to take shape. The one or more energy beams 134 or laser beams may include electromagnetic radiation having any suitable wavelength or wavelength range, such as a wavelength or wavelength range corresponding to infrared light, visible light, and/or ultraviolet light.

Typically, with a DMLM, EBM, or SLM system, the powder material 118 is fully melted, with respective layers being melted or re-melted with respective passes of the energy beams 134. With DMLS or SLS systems, typically the layers of powder material 118 are sintered, fusing particles of powder material 118 to one another generally without reaching the melting point of the powder material 118. The energy beam system 132 may include componentry integrated as part of the additive manufacturing machine 102 and/or componentry that is provided separately from the additive manufacturing machine 102.

The energy beam system 132 may include one or more irradiation devices 138 respectively configured to generate one or more of energy beams 134 and to direct the one or more energy beams upon the build plane 128. The one or more irradiation devices may respectively include an energy beam source 140, an optical assembly 142, and a scanner 144. The optical assembly 142 may include a plurality of optical elements configured to direct an energy beam 134 onto the build plane 128. The optical assembly 142 may include one or more optical elements, such as lenses through which an energy beam 134 may be transmitted along an optical path from the energy beam source 140 to the build plane 128. By way of example, an optical assembly 142 may include one more focusing lenses that focus an energy beam 134 on the build plane 128. An exemplary scanner 144 may include a galvo scanner, an electro-optic modulator, an acousto-optic modulator, a piezo-driven mirror, or the like. In some embodiments, the energy beam system 132 may include a window 146, such as a protective glass, that separates one or more components of the energy beam system 132 from the environment of the process chamber 148. The window 146 may prevent contaminants from fumes associated with the additive manufacturing process, such as powder material, dust, soot, residues, vapor, splatter particles, byproducts, and the like, from coming into contact with sensitive components of an energy beam system 132.

The energy beam system 132 shown in FIG. 1 schematically depicts one irradiation device 138. In some embodiments, an energy beam system 132 may include a plurality of irradiation devices 138, such as two, three, four, six, eight, ten, or more irradiation devices 138, and such irradiation devices may respectively include an optical assembly 142. The plurality of irradiation devices 138 may respectively generate one or more energy beams 134 that are respectively scannable within a scan field 150 incident upon at least a portion of the build plane 128 to selectively consolidate the portions of the powder material 118 that thereby form part of the object 114.

To irradiate a layer of the powder bed 136, the one or more irradiation devices 138 respectively direct an energy beam 134 across the respective portions of the build plane 128 to selectively consolidate the portions of the powder material 118 that thereby forms part of the object 114. The one or more energy beams 134 may become incident upon the build plane 128 defined by the powder bed 136, for example, after passing through one or more optical elements of the optical assembly 142 and/or through the window 146 of the energy beam system 132. As sequential layers of the powder bed 136 are consolidated, a build piston 152 gradually lowers the build platform 130 to make room for sequential layers of powder material 118. As sequential layers of powder material 118 are applied across the build plane 128, the next sequential layer of powder material 118 defines the surface of the powder bed 136 coinciding with the build plane 128. Sequential layers of the powder bed 136 may be selectively consolidated until a completed object 114 has been additively manufactured. In some embodiments, an additive manufacturing machine 102 may utilize an overflow module (not shown) to capture excess powder material 118. Additionally, or in the alternative, excess powder material 118 may be redistributed across the build plane 128 when applying a next sequential layer of powder material 118. It will be appreciated that other systems may be provided for handling the powder material 118, including different powder supply systems and/or excess powder recapture systems. The subject matter of the present disclosure may be practiced with any suitable additive manufacturing machine 102 without departing from the scope hereof.

Still referring to FIG. 1, an additive manufacturing machine 102 may include an imaging system 154 configured to monitor one or more operating parameters associated with the additive manufacturing machine 102, the energy beam system 132, and/or an additive manufacturing process. The one or more operating parameters monitored by the imaging system 154 may be utilized to calibrate one or more components and/or operating parameters of the additive manufacturing machine 102, the energy beam system 132, and/or an additive manufacturing process. Additionally, or in the alternative, the imaging system 154 may include a melt pool monitoring system. The imaging system 154 may detect an imaging beam such as a reflected portion of an energy beam 134 and/or an infrared beam from a laser diode or other light source.

The energy beam system 132 may be positioned at any suitable location within the process chamber 148. Additionally, or in the alternative, the energy beam system 132 may be coupled to a perimeter wall of the process chamber 148. In some embodiments, an additive manufacturing machine 102 may include a positioning system 158 configured to move an energy beam system 132 and/or one or more components thereof relative to the build plane 128. The positioning system 158 may move the energy beam system 132 and/or one or more components thereof to specified build coordinates and/or along specified build vectors corresponding to a coordinate system, such as a cartesian coordinate system, in accordance with control commands provided, for example, by the control system 104. The coordinate system may correspond to the build plane 128. Additionally, or in the alternative, the coordinate system may correspond to positions of the scanner 144. The control commands may be provided, for example, to carry out operations of the one or more energy beam system 132 and/or of the additive manufacturing machine 102 in accordance with the present disclosure. The positioning system 158 may include one or more gantry elements 160 configured to move the energy beam system 132 and/or one or more components thereof across the powder bed. Respective gantry elements 160 may move the energy beam system 132 and/or one or more components thereof in one or more directions, such as an X-direction, a Y-direction, and/or a Z-direction. In some embodiments, the positioning system 158 may be coupled to the housing assembly 156 that contains one or more components of the energy beam system 132. The housing assembly 156 may be coupled to one or more gantry elements 160 by one or more gantry mounts 162. The positioning system 158 may include a drive motor 164 configured to move the housing assembly 156 and/or the one or more components the energy beam system 132 according to instructions for the control system 104. The positioning system 158 may include componentry typically associated with a gantry system, such as stepper motors, drive elements, carriages, and so forth.

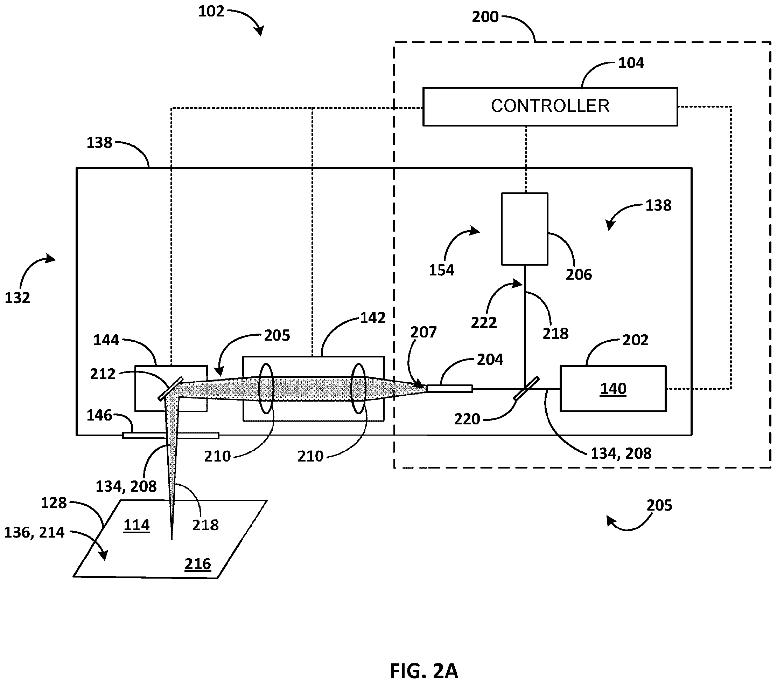

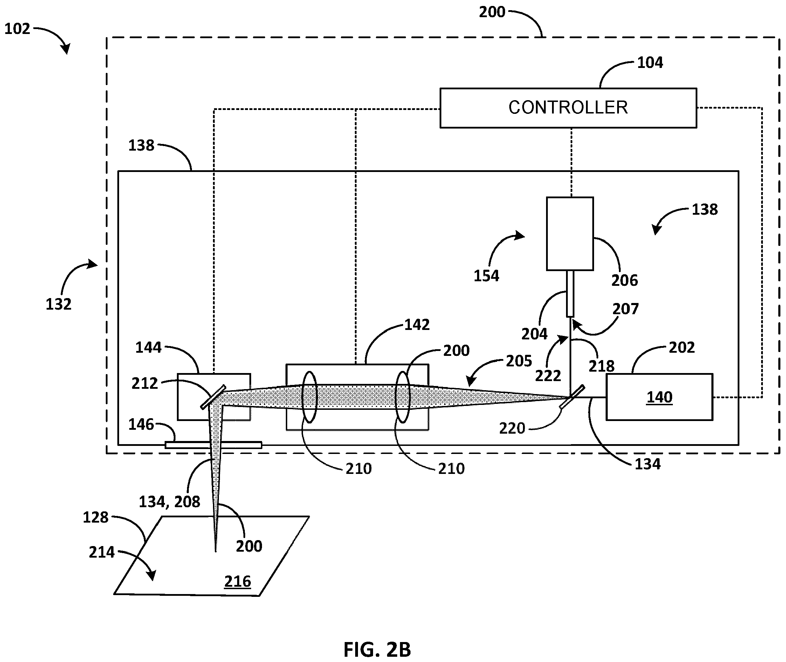

Referring now to FIGs. 2A and 2B, exemplary calibration systems 200 are further described. A calibration system 200 may include and/or utilize one or more components of the energy beam system 132 and/or one or more components of the imaging system 154. As shown, an exemplary calibration system 200 may include a light source 202, an optical fiber 204, and a detection device 206. The light source 202, the optical fiber 204, and the detection device 206 may respectively define a portion of the energy beam system 132 and/or a portion of the imaging system 154.

The light source 202 utilized by the calibration system 200 may be an energy beam source 140 utilized to irradiate the powder bed 136. Additionally, or in the alternative, the light source 202 may be provided separately from the energy beam source 140. The light source 202 may include one or more laser diodes, LED diodes, or the like. The light source 202 may emit a calibration beam 208. In some embodiments, the calibration beam 208 may be an energy beam 134 utilized to consolidate the powder bed 136. Additionally, or the alternative, the calibration beam 208 may be provided separately from the energy beam 134, and/or the calibration beam 208 may have one or more beam properties that differ from an energy beam 134 utilized to consolidate the powder bed 136. Such one or more beam properties may include power level, intensity, intensity distribution, and/or spot size.

In some embodiments, as shown, for example, in FIG. 2A, the optical fiber 204 may be disposed along a beam path 205, such as between the energy beam source 140 and the optical assembly 142. Additionally, or in the alternative, in some embodiments, as shown, for example, in FIG. 2B, the optical fiber 204 may be disposed in front of the detection device 206. As shown in FIG. 2A, in some embodiments, the calibration beam 208 may propagate through the optical fiber 204 and may be emitted from a fiber end 207 of the optical fiber 204. In some embodiments, the optical fiber 204 may define a portion of the energy beam source 140 or a portion of the optical assembly 142. As shown in FIG. 2B, in some embodiments, the calibration beam 208 may be emitted from the energy beam source 140 and may propagate along the beam path 205 from the energy beam source 140 to the optical assembly 142, for example, without propagating through the optical fiber 204 and/or without being emitted from the fiber end 207 of the optical fiber 204. The optical fiber 204 may be an end-emitting optical fiber 204. In some embodiments, the optical fiber 204 may be a single-mode optical fiber 204. In some embodiments, the optical fiber 204 may be a multi-mode optical fiber 204.

Referring further to FIGs. 2A and 2B, the calibration beam 208 may proceed along the beam path 205 through one or more optical elements 210, such as one or more lenses, mirrors, diffraction elements, filters, or the like. One or more of the optical elements 210 may be actuatable to augment an alignment and/or orientation of the beam path 205 and/or to augment one or more beam properties of a calibration beam 208 and/or an energy beam 134 propagating along the beam path 205. The one or more optical elements 210 may define a portion of an optical assembly 142. The one or more optical elements 210 may include a collimating lens or lens assembly, a telecentric lens or lens assembly, an f-theta lens or lens assembly, or the like. Additionally, or in the alternative, the one or more optical elements 210 may include a focusing lens or lens assembly. Additionally, or in the alternative, the one or more optical elements may include a beam shaping element.

The calibration beam 208 may become incident upon a deflecting element 212. The deflecting element 212 may be disposed along the beam path 205 between the optical fiber 204 and the build plane 128, such as between the optical fiber 204 and the window 146 of the energy beam system 132. The deflecting element 212 may include a mirror, a diffraction element, a filter, or the like. The deflecting element 212 may be actuatable to direct the calibration beam 208 onto a calibration substrate 214 that includes a reflective surface 216. Additionally, or in the alternative, the deflecting element 212 may be actuatable to change an angle of incidence of the calibration beam 208, for example, with respect to the calibration substrate 214 and/or with respect to the reflective surface 216 of the calibration substrate 214. The deflecting element 212 may be disposed along the beam path 205 between the optical fiber 204 and the calibration substrate 214. The deflecting element 212 may define a portion of a scanner 144 that directs the energy beam 134 onto the powder bed 136 when consolidating the powder bed 136. Additionally, or in the alternative, the deflecting element 212 may define a component separate from the scanner 144. In some embodiments, the deflecting element 212 may define a portion of the optical assembly 142. Additionally, or in the alternative the deflecting element 212 may include and/or define an optical element 210 of the optical assembly 142. Additionally, or in the alternative, the deflecting element 212 may be disposed along the beam path 205, such as between the optical assembly 142 and the scanner 144.

The calibration substrate 214 may include any substrate that has a reflective surface 216 suitable for reflecting at least a portion of the calibration beam 208. In some embodiments, the reflective surface 216 may define at least a portion of the build plane 128. As shown, for example, in FIG. 2A, at least a portion of the powder bed 136 and/or at least a portion of an object 114 formed by consolidating the powder bed 136 with an energy beam 134 may define the calibration substrate 214. A surface of the powder bed 136 and/or a surface of the object 114 may define the reflective surface 216 of the calibration substrate 214. The powder bed 136 and/or the object 114 may have material properties that are suitable for reflecting at least a portion of the calibration beam 208. Additionally, or in the alternative, as shown, for example, in FIG. 2B, the calibration substrate 214 may be a build platform 130, a build plate, a calibration plate, or the like, that has a reflective surface 216 suitable for reflecting at least a portion of the calibration beam 208. Such a build platform 130, build plate, calibration plate, etc., may be positioned at a location that defines at least a portion of the build plane 128.

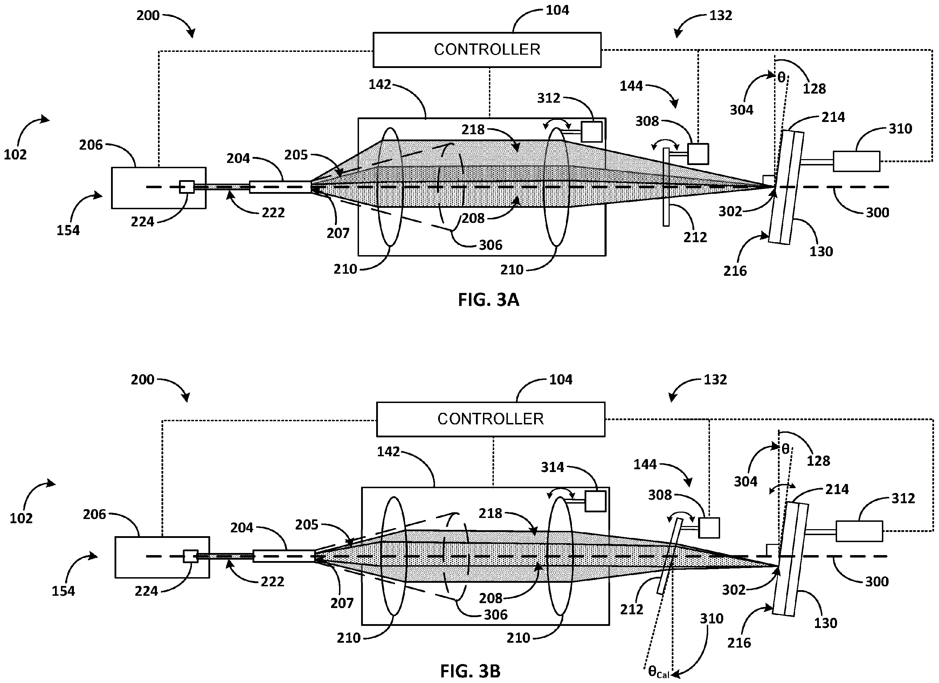

Referring still to FIGs. 2A and 2B, during a calibration operation, a portion of the calibration beam 208 may be reflected by the reflective surface 216. The portion of the calibration beam 208 reflected by the reflective surface 216 may be referred to as a reflected beam 218. The reflected beam 218 may follow at least a portion of the beam path 205 in the opposite direction of the calibration beam propagating towards the reflective surface 216. Depending on an orientation of the reflected beam 218 with respect to an optical axis of the optical assembly 142, at least a portion of the reflected beam 218 may become incident upon the fiber end 207 of the optical fiber 204. The portion of the reflected beam 218 that becomes incident upon the fiber end 207 of the optical fiber 204 may propagate through the optical fiber 204 and may become incident upon the detection device 206. As described further with reference to FIGs. 3A and 3B, at least a portion of the reflected beam 218 may become incident upon the fiber end 207 and may propagate through the optical fiber 204 and may become incident upon the detection device 206 when the reflected beam 218 is aligned with the optical axis of the optical assembly 142. The portion of the reflected beam 218 that propagates through the optical fiber 204 and becomes incident upon the detection device 206 may depend at least in part on an extent to which the reflected beam 218 is aligned with the optical axis of the optical assembly 142. When the reflected beam 218 diverges from the optical axis of the optical assembly 142, at least a portion of the reflected beam 218 may miss the fiber end 207. A reflected beam 218 or a portion thereof that misses the fiber end 207 will not propagate through the optical fiber 204 and therefore will not become incident upon the detection device 206.

The reflected beam 218 may follow a detection path 222 from the reflective surface 216 to the detection device 206. A portion of the beam path 205 may define part of the detection path 222. The reflected beam 218 may propagate along the portion of the beam path 205 defining part of the detection path 222 in an opposite direction of the calibration beam 208. The optical fiber 204 may define a portion of the detection path 222. In some embodiments, a beam splitter 220 may define a portion of a detection path 222. The beam splitter 220 may be located along the beam path 205 and/or the detection path 222. The beam splitter 220 may direct the reflected beam along a detection path 222. The detection path 222 may include a portion of the beam path 205. The detection path 222 may diverge from the beam path 205 at the beam splitter 220. As shown in FIG. 2A, the beam splitter 220 may be located between the optical fiber 204 and the detection device 206. Additionally, or in the alternative, the beam splitter 220 may be located between the optical fiber 204 and the energy beam source 140. In some embodiments, as shown in FIG. 2A, a reflected beam 218 that propagates through the optical fiber 204 may become incident upon the beam splitter 220, and the beam splitter 220 may direct the reflected beam 218 to the detection device 206. Additionally, or in the alternative, in some embodiments, as shown in FIG. 2B, the beam splitter 220 may be located between the optical assembly 142 and the optical fiber 204. Additionally, or in the alternative, the beam splitter 220 may be located between the optical assembly 142 and be energy beam source 140. In some embodiments, such as shown in FIG. 2B, a reflected beam 218 that becomes incident upon the beam splitter 220 may be reflected onto to the fiber end 207 and may propagate through the optical fiber 204 and may become incident upon the detection device 206.

The detection device 206 may obtain calibration data corresponding to the calibration beam 208 and/or the reflected beam 218 that becomes incident upon the detection device 206. The calibration data obtained by the detection device 206 may be transmitted to a control system 104. The control system 104 may utilize the calibration data to perform one or more operations, such as calibration operations, in accordance with the present disclosure. An exemplary detection device 206 may include a detector element 224, such as a photo diode, a photo diode array, an image sensor, a camera, or the like. In some embodiments, a detection device 206 may include charge-coupled device (e.g., a CCD sensor), an active-pixel sensor (e.g., a CMOS sensor), a quanta image device (e.g., a QIS sensor), or the like. In some embodiments, a detection device 206 may include a detector element 224 that has a single-pixel sensor, such as in the case of a single-pixel CCD sensor, a single-pixel CMOS sensor, a single-pixel QIS sensor, a single-pixel image sensor, a single-pixel camera, or the like. Additionally, or in the alternative, a detection device 206 may include detector element 224 that has a multi-pixel sensor. In some embodiments, a calibration system 200 may utilize one or more pixels of a detector element 224 to obtain the calibration data. For example, a calibration system 200 may utilize a single pixel of detector element 224 that includes a multi-pixel sensor, such as in the case of a multi-pixel CCD sensor, a multi-pixel CMOS sensor, a multi-pixel QIS sensor), a multi-pixel image sensor, a multi-pixel camera, or the like. Additionally, or in the alternative, a calibration system 200 may utilize a plurality of pixels of a detector element 224 that includes a multi-pixel sensor to obtain the calibration data. In some embodiments, the detection device 206 may include one or more optical elements (not shown), such as lenses, mirrors, diffraction elements, filters, beam splitters, and the like. Such optical elements may focus or otherwise condition the reflected beam 218 prior to becoming incident upon one or more detector elements 224 of the detection device 206.

Now referring to FIGs. 3A and 3B, exemplary calibration systems 200 are further described. An alignment and/or position of a calibration beam 208 and/or reflected beam 218 may be described with reference to an optical axis 300 of the optical assembly 142. Additionally, or in the alternative, an alignment and/or position of a calibration beam 208 and/or reflected beam 218 may be described with reference to a focal point of the calibration beam 208 and/or with reference to an incidence position 302 upon which the calibration beam 208 becomes incident upon the reflective surface 216 of the calibration substrate 214. The incidence position 302 may be aligned or offset with respect to an optical axis 300 of the optical assembly 142 and/or with respect to the focal point of the calibration beam 208. The reflected beam 218 may propagate from the incidence position 302 in a direction that depends at least in part on an alignment angle $(\Theta)$ 304 of the calibration substrate 214 and/or the build platform 130. The alignment angle $(\Theta)$ 304 may be determined with reference to the build plane 128. As shown in FIG. 3A, a reflected beam 218 may be misaligned and/or offset with respect to the optical axis 300 of the optical assembly 142. All or a portion of the reflected beam 218 shown in FIG. 3A may miss the fiber end 207 of the optical fiber 204 when the reflected beam 218 has a misalignment and/or an offset with respect to the optical axis 300. As shown in FIG. 3B, a reflected beam may be aligned with respect to the optical axis 300. All or a portion of the reflected beam 218 shown in FIG. 3B may become incident upon the fiber end 207 of the optical fiber 204 when the reflected beam 218 is aligned with the optical axis 300. The fiber end 207 may define a virtual aperture 306. The portion of the reflected beam 218 that passes through the virtual aperture 306 may become incident upon the fiber end 207. The portion of the reflected beam that misses the virtual aperture 306 may miss the fiber end 207. The portion of the reflected beam 218 that becomes incident upon the fiber end 207 may propagate through the optical fiber 204 and become incident upon a detector element 224 of the detection device 206. The detection device 206 may provide a signal to the control system 104 indicative of at least a portion of the reflected beam 218 becoming incident upon the detector element 224. Additionally, or in the alternative, the detection device 206 may provide a signal to the control system 104 indicative of at least a portion of the reflected beam 218 missing the detector element 224. The control system 104 may determine calibration data based at least in part on one or more signals from the detection device 206.

With reference to FIGs. 3A and 3B, the calibration substrate 214 and/or the build platform 130 may have a normal orientation or an oblique orientation relative to the optical axis 300. A misalignment and/or offset of the reflected beam 218 may be at least partially attributable to an orientation of the calibration substrate 214 and/or the build platform 130 in relation to the optical axis 300. The alignment angle ($\Theta$) 304 may be equal to zero (0) when the calibration substrate 214 and/or the build platform 130 has a normal orientation relative to the optical axis 300. Additionally, or in the alternative, the alignment angle ($\Theta$) 304 may be equal to zero (0) when the calibration substrate 214 and/or the build platform 130 has a parallel orientation relative to the build plane 128. The alignment angle ($\Theta$) 304 may be greater than zero (0) or less than zero (0) when the calibration substrate 214 and/or the build platform 130 has an oblique orientation relative to the optical axis 300 and/or relative to the build plane 128. An alignment angle ($\theta$) 304 that is greater than zero (0) or less than zero (0) may indicate a misalignment and/or offset with respect to calibration substrate 214 and/or the build platform 130. Additionally, or in the alternative, an alignment angle ($\theta$) 304 that is greater than zero (0) or less than zero (0) may indicate a misalignment and/or offset with respect to one or more components of the energy beam system 132, the imaging system 154, and/or the calibration system 200. For example, an alignment angle ($\theta$) 304 that is greater than zero (0) or less than zero (0) may indicate a misalignment and/or offset with respect to the scanner 144, the optical assembly 142, the optical fiber 204, and/or the energy beam source 140.

The incidence position 302 may have coordinates, such as X, Y, and/or Z coordinates corresponding to a cartesian coordinate system. The coordinate system may correspond to the build plane 128. Additionally, or in the alternative, the coordinate system may correspond to positions of the scanner 144. The coordinates of the incidence position 302 may indicate an alignment and/or a misalignment with respect to the optical axis 300 and/or with respect to the focal point of the calibration beam 208. A misalignment and/or offset of the reflected beam 218 may be at least partially attributable to a location of the incidence position 302 in relation to the optical axis 300 and/or in relation to a focal point of the calibration beam 208. In some embodiments, the location of the incidence position 302 may have X and Y coordinates of (0,0) when the incidence position 302 coincides with the optical axis 300. The location of the incidence position 302 may have X and Y coordinates that differ from (0,0) when the incidence position 302 is misaligned and/or offset with respect to the optical axis 300. The incidence position 302 may have a Z coordinate of (0) when the incidence position 302 coincides with the focal point of the calibration beam 208. The incidence position 302 may have a Z coordinate that differs from (0) when the incidence position 302 is misaligned and/or offset with respect to the focal point of the calibration beam 208. The location of the incidence position 302 may have X, Y, and Z coordinates of (0,0,0) when the incidence position 302 coincides with the optical axis 300 of the optical assembly 142 and with the focal point of the calibration beam 208.

With reference to FIG. 3B, and with further reference to FIGs. 2A and 2B, the control system 104 may provide one or more calibration commands based at least in part on the calibration data. The one or more calibration commands may be provided to one or more controllable components of the additive manufacturing machine 102, such as to one or more controllable components of the energy beam system 132, to one or more components of the imaging system 154, and/or to one or more components of the calibration system 200. The one or more calibration commands may calibrate a position and/or orientation of one or more components of the additive manufacturing machine 102. For example, one or more calibration commands may calibrate (e.g., adjust) a position and/or orientation of one or more components of the energy beam system 132, the imaging system 154, and/or the calibration system 200. Additionally, or in the alternative, the one or more calibration commands may calibrate a position and/or orientation of a calibration beam 208 and/or an energy beam 134, and/or may calibrate a position and/or orientation of a reflected beam 218 corresponding to the calibration beam 208.

In some embodiments, a position of a deflecting element 212 may be adjusted based at least in part on a calibration command from the control system 104. The deflecting element 212 may define a portion of a scanner 144. Alternatively, the deflecting element 212 may be provided separately from the scanner 144. The position of the deflecting element 212 may be adjusted least in part such that the reflected beam 218 becomes aligned with the optical axis 300, as shown, for example, in FIG. 3B. Additionally, or in the alternative, the position of the deflecting element 212 may be adjusted based at least in part on an alignment of the reflected beam 218 and/or the calibration beam 208 with the optical axis 300, for example, to compensate for a misalignment of the calibration beam 208 with respect to the optical axis 300. In some embodiments, a position of the deflecting element 212 may be adjusted by actuating a deflecting element-actuator 308. The deflecting element-actuator 308 may define a portion of a scanner 144 and/or a portion of the deflecting element 212. The position of the deflecting element 212 may be adjusted, for example, by actuating the deflecting element-actuator 308, in an amount corresponding to a calibration angle ($\theta_{Cal}$) 310. The calibration angle may be determined based at least in part on calibration data determined from and/or corresponding to the alignment angle ($\theta$) 304 of the calibration substrate 214.

Additionally, or in the alternative, a position of the build platform 130 and/or calibration substrate 214 may be adjusted based at least in part on a calibration command from the control system 104. The position of the build platform 130 and/or calibration substrate 214 may be adjusted least in part such that the reflected beam 218 becomes aligned with the optical axis 300 and/or to compensate for a misalignment of the calibration beam 208 with respect to the optical axis 300. The position of the build platform 130 and/or calibration substrate 214 may be adjusted based at least in part on an alignment of the reflected beam 218 and/or the calibration beam 208 with the optical axis 300, for example, to compensate for a misalignment of the calibration beam 208 with respect to the optical axis 300. In some embodiments, the position of the build platform 130 and/or calibration substrate 214 may be adjusted by actuating a build platform-actuator 312. The build platform-actuator 312 may define a portion of a build module 110 (FIG. 1). The position of the build platform 130 and/or calibration substrate 214 may be adjusted based at least in part on calibration data determined from and/or corresponding to the alignment angle ($\Theta$) 304 of the calibration substrate 214. The adjustment to the position of the build platform 130 and/or calibration substrate 214 may offset the alignment angle ($\theta$) 304 of the calibration substrate 214.

Additionally, or in the alternative, a position of one or more optical elements 210 may be adjusted based at least in part on a calibration command from the control system 104. The position of the one or more optical elements 210 may be adjusted least in part such that the reflected beam 218 becomes aligned with the optical axis 300 and/or to compensate for a misalignment of the calibration beam 208 with respect to the optical axis 300. The position of the one or more optical elements 210 may be adjusted based at least in part on an alignment of the reflected beam 218 and/or the calibration beam 208 with the optical axis 300, for example, to compensate for a misalignment of the calibration beam 208 with respect to the optical axis 300. In some embodiments, the position of the one or more optical elements 210 may be adjusted by actuating an optical element-actuator 314. The optical element-actuator 314 may define a portion of the optical assembly 142. The position of the one or more optical elements 210 may be adjusted based at least in part on calibration data determined from and/or corresponding to the alignment angle ($\theta$) 304 of the calibration substrate 214. The adjustment to the position of the one or more optical elements 210 may offset the alignment angle ($\theta$) 304 of the calibration substrate 214.

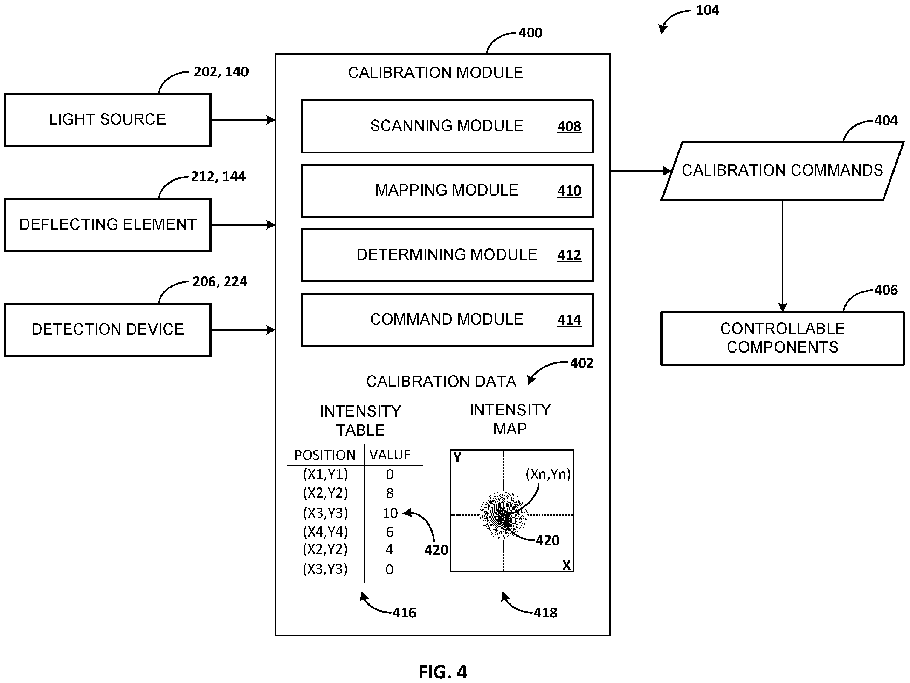

Now referring to FIG. 4, exemplary calibration operations are described. The calibration operations may be performed at least in part by a control system 104. The control system 104 may include a calibration module 400. The calibration module 400 may define a portion of the control system 104. The calibration module 400 may receive inputs from one or more components of the additive manufacturing machine 102, such as one more components of the energy beam system 132, the imaging system 154, and/or the calibration systems 200.

As shown in FIG. 4, the calibration module 400 may receive inputs from and/or corresponding to operation of the light source 202 (e.g., the energy beam source 140), the deflecting element 212 (e.g., the scanner 144), and/or the detection device 206 (e.g., the one or more detector elements 224). The inputs from the scanner may include position information corresponding to an orientation of the scanner 144. The inputs from and/or corresponding to operation of the light source 202 may indicate a calibration beam 208 having been emitted from the light source 202. The inputs from and/or corresponding to operation of the detection device 206 may indicate a reflected beam 218 having been detected by the detection device 206. The inputs from and/or corresponding to operation of the deflecting element 212 may indicate a position of the deflecting element 212, such as a position of the deflecting element corresponding to the calibration beam 208 having been emitted from the light source 202 and/or a position of the deflecting element corresponding to the reflected beam 218 having been detected by the detection device 206. The inputs from and/or corresponding to operation of the light source 202 may include one or more beam properties corresponding to the calibration beam 208, such as power level, intensity, intensity distribution, and/or spot size of the calibration beam 208. The inputs from and/or corresponding to operation of the detection device 206 may include one or more beam properties corresponding to the reflected beam 218, such as power level, intensity, intensity distribution, and/or spot size of the reflected beam 218. The inputs received by the calibration module 400 may include calibration data 402 and/or calibration data 402 may be determined based at least in part on such inputs.

Calibration module 400 may perform one or more calibration operations based at least in part on the inputs received and/or based at least in part on the calibration data 402 determined from such inputs. One more calibration operations may include determining calibration commands 404. The calibration commands 404 may perform a calibration operation with respect to one or more controllable components 406 of the additive manufacturing machine 102, such as to one or more controllable components 406 of the energy beam system 132, the imaging system 154, and/or the calibration system 200. The one or more calibration operations may calibrate a position and/or orientation of one or more components of the additive manufacturing machine 102 (e.g., one or more components of the energy beam system 132, the imaging system 154, and/or the calibration system 200). Additionally, or in the alternative, the one or more calibration operations may calibrate a position and/or orientation of a calibration beam 208 and/or an energy beam 134, and/or may calibrate a position and/or orientation of a reflected beam 218 corresponding to the calibration beam 208.

Calibration module 400 may include one or more modules or submodules configured to perform one or more calibration operations. In some embodiments, the calibration module 400 may include a scanning module 408. The scanning module 408 may perform a calibration scan. Calibration scan may include the light source 202 emitting a calibration beam 208 with the deflecting element 212 at a specified position. Additionally, or in the alternative, calibration scan may include the detection device 206 determining a reflected beam 218 becoming incident upon a detector element 224. The calibration scan may be performed for one or more positions of the deflecting element 212. The calibration scan may include the detection device 206 providing one or more inputs to the control system 104 (e.g., to the calibration module 400) indicating one or more beam properties of the reflected beam 218. In some embodiments, the one or more inputs may include beam intensity values corresponding to the reflected beam 218. Additionally, or in the alternative, the calibration scan may include the deflecting element 212 providing one or more inputs to the control system 104 (e.g., to the calibration module 400) indicating a position of the deflecting element 212 corresponding to the one or more beam properties of the reflected beam 218.

In some embodiments, the calibration module 400 may include a mapping module 410. The mapping module 410 may associate, correlate, and/or map one or more beam properties of the reflected beam 218 to the position of the deflecting element 212. Additionally, or in the alternative, the mapping module 410 may associate, correlate, and/or map one or more beam properties of the reflected beam 218 to position information, such as coordinates of the build plane 128 and/or a position of the deflecting element 212. In some embodiments, the calibration module 400 may include a determining module 412. The determining module 412 may determine an alignment and/or position of the calibration beam 208 and/or reflected beam 218, for example, based at least in part on the one or more inputs to the calibration module 400 and/or the calibration data 402 corresponding thereto. The calibration data 402 may include the alignment and/or position of the calibration beam 208 and/or reflected beam 218 determined by the determining module 412. In some embodiments, the calibration module 400 may include a command module 414. The command module 414 may determine and/or provide calibration commands 404, such as to one or more controllable components 406.

Referring still to FIG. 4, in some embodiments, a calibration operation may include moving the deflecting element 212 to a specified position and emitting a calibration beam 208 with the deflecting element 212 at the specified position. Additionally, or in the alternative, the calibration operation may include determining an input from the detection device 206 corresponding to the specified position of the deflecting element 212. The input from the detection device 206 may correspond to one or more beam properties, such as an intensity, of a reflected beam 218 that becomes incident upon the detector element 224 corresponding to the specified position of the deflecting element 212. In some embodiments, an input from the detection device 206 may be determined for a plurality of specified positions of the inflicting element 212. As shown in FIG. 4, the calibration data 402 may include data corresponding to one or more beam property values 416. In some embodiments, the beam property values 416 may include an intensity of a signal from the detection device 206. Additionally, or in the alternative, one or more of the beam property values 416 may be determined based at least in part on the signal from the detection device 206, such as based at least in part on the intensity of the signal from the detection device 206. In some embodiments, the beam property values 416. The beam property values 416 may include or correspond to the position of the deflecting element 212 and/or the coordinates of the build plane 128 corresponding to the respective position of the deflecting element 212. The beam property values 416, such as the beam intensity values, may include a table, as shown, for example, in FIG. 4. The table may relate the beam property values 416, such as the beam intensity values, to the corresponding coordinates of the build plane 128 and/or to the corresponding position of the deflecting element 212. The calibration data may include such a table. Additionally, or in the alternative, the calibration data may include a graphical representation 418. The graphical representation 418 may graphically represent the beam property values 416, such as the beam intensity values, corresponding to respective coordinates of the build plane 128 and/or to the corresponding position of the deflecting element 212. In some embodiments, the graphical representation 418 may include a heat map, such as a spatial heat map. Such a heat map may graphically relate the respective beam property values 416 to respectively corresponding coordinates of the build plane 128 and/or to the corresponding position of the deflecting element 212.

In some embodiments, an alignment and/or position of the calibration beam 208 and/or reflected beam 218 may be determined based at least in part on the extent to which the reflected beam 218 is detected by the detection device 206. When the reflected beam 218 is aligned with respect to the optical axis 300 (e.g., FIG. 3B), the reflected beam may become incident upon the fiber end 207 of the optical fiber 204 and may propagate through the optical fiber 204 and become incident upon the detection device 206, such as upon a detector element of the detection device 206. When the reflected beam 218 is misaligned and/or offset with respect to the optical axis 300 (e.g., FIG. 3B), the reflected beam 218 may become incident upon the fiber end 207 of the optical fiber 204 and may propagate through the optical fiber 204 and become incident upon the detection device 206, such as upon a detector element 224 of the detection device 206. In some embodiments, the proportion of the reflected beam 218 that becomes incident upon the detection device 206 may depend at least in part on the extent to which the calibration beam 208 and/or the reflected beam 218 is aligned with the optical axis 300. Additionally, or in the alternative, an intensity, magnitude, or strength of a signal and/or input from the detection device 206 may depend at least in part on the extent to which the calibration beam 208 and/or the reflected beam 218 is aligned with the optical axis 300. For example, the intensity, magnitude, or strength of the signal and/or input from the detection device 206 may be relatively high when the calibration beam 208 and/or the reflected beam 218 has a high degree of alignment with the optical axis 300. Additionally, or in the alternative, the intensity, magnitude, or strength of the signal and/or input from the detection device 206 may be relatively low when the calibration beam 208 and/or the reflected beam 218 has a low degree of alignment with the optical axis 300. Additionally, or in the alternative, the detection device 206 may provide a null or nominal signal and/or input, corresponding, for example, to a value of zero (0), when the calibration beam 208 and/or the reflected beam 218 is misaligned and/or offset from the optical axis 300.

In some embodiments, a position of the deflecting element 212 corresponding an alignment of the calibration beam 208 and/or reflected beam 218 with the optical axis 300 may be determined based at least in part on one or more beam property values 416. For example, in some embodiments, the position of the deflecting element 212 that corresponds to the alignment of the calibration beam 208 and/or reflected beam 218 with the optical axis 300 may be determined based at least in part on a maximum beam property value 420. In some embodiments, the maximum beam property value 420 may be selected from among a plurality of beam property values 416 respectively corresponding to a respective position of the deflecting element 212. Additionally, or in the alternative, in some embodiments, the position of the deflecting element 212 that corresponds to the alignment of the calibration beam 208 and/or reflected beam 218 with the optical axis 300 may be determined based at least in part on an extrapolation from among a plurality of beam property values 416. For example, the maximum beam property value 420 may be determined based at least in part on an extrapolation from among a plurality of beam property values 416. Additionally, or in the alternative, in some embodiments, the position of the deflecting element 212 that corresponds to the alignment of the calibration beam 208 and/or reflected beam 218 with the optical axis 300 may be determined based at least in part on a weighted centroid corresponding to a plurality of data points for a signal from the detection device 206 and/or for one or more beam property values 416 determined therefrom. In some embodiments, the weighted centroid may be determined based at least in part on an intensity of a signal from the detection device 206. Additionally, or in the alternative, the weighted centroid may be determined based at least in part on one or more beam property values 416 corresponding to the signal from the detection device 206, such as to the intensity of the signal from the detection device 206. A weighted centroid corresponding to the beam property values 416 may be determined from expression (1), as follows:

$$\bar{a} = \frac{\sum a_i v_i}{\sum v_i} \qquad (1).$$

The term ($a_i$) represents a corresponding coordinate of the build plane 128 and/or a corresponding position of the deflecting element 212, as applicable. For example, the term ($a_i$) may represent a corresponding X, Y, or Z position of the build plane 128 in a respective coordinate direction, or a corresponding position of the deflecting element 212. The term ($v_i$) represents the respective beam property value 416, such as the intensity of the signal from the detection device 206 and/or the beam property value 416 determined from the signal from the detection device 206, corresponding to the respective position, ($a_i$). The term ($\bar{a}$) represents the mean coordinate of the build plane 128 and/or a corresponding position of the deflecting element 212, as applicable, weighted by the respective beam property value 416. In some embodiments, the X, Y, and/or Z position of the build plane 128 and/or the corresponding position of the deflecting element 212 may be respectively determined from expressions (2), (3), and (4), as follows:

$$\bar{x} = \frac{\sum x_i v_i}{\sum v_i} \qquad (2);$$

$$\bar{y} = \frac{\sum y_i v_i}{\sum v_i} \qquad (3);$$

$$\bar{z} = \frac{\sum z_i v_i}{\sum v_i} \qquad (4).$$

The term $(x_i)$ in expression (2) may represent a corresponding X position of the build plane 128, or a corresponding X position of the deflecting element 212. The term $(\bar{x})$ in expression (2) represents the mean coordinate of the build plane 128 and/or a corresponding position of the deflecting element 212, in the X direction, weighted by the respective beam property value 416. The term $(y_i)$ in expression (3) may represent a corresponding Y position of the build plane 128, or a corresponding Y position of the deflecting element 212. The term $(\bar{y})$ in expression (3) represents the mean coordinate of the build plane 128 and/or a corresponding position of the deflecting element 212, in the Y direction, weighted by the respective beam property value 416. The term $(z_i)$ in expression (4) may represent a corresponding Z position of the build plane 128, or a corresponding Z position of the deflecting element 212. The term $(\bar{z})$ in expression (4) represents the mean coordinate of the build plane 128 and/or a corresponding position of the deflecting element 212, in the Z direction, weighted by the respective beam property value 416.

The weighted centroid may be determined for one or more coordinate positions, such as the X, Y, and/or Z coordinates corresponding to the terms $(\bar{x})$, $(\bar{y})$, and/or (2) from expressions (2), (3), and/or (4), respectively. For example, in some embodiments, the weighted centroid may be determined for two coordinate positions, such as the X and Y coordinate positions corresponding to the terms $(\bar{x})$ and $(\bar{y})$ from expressions (2) and (3), respectively. Additionally, or in the alternative, the weighted centroid may be determined for the X and Z coordinate positions, the Y and Z coordinate positions, or the Z, Y, and Z coordinate positions.

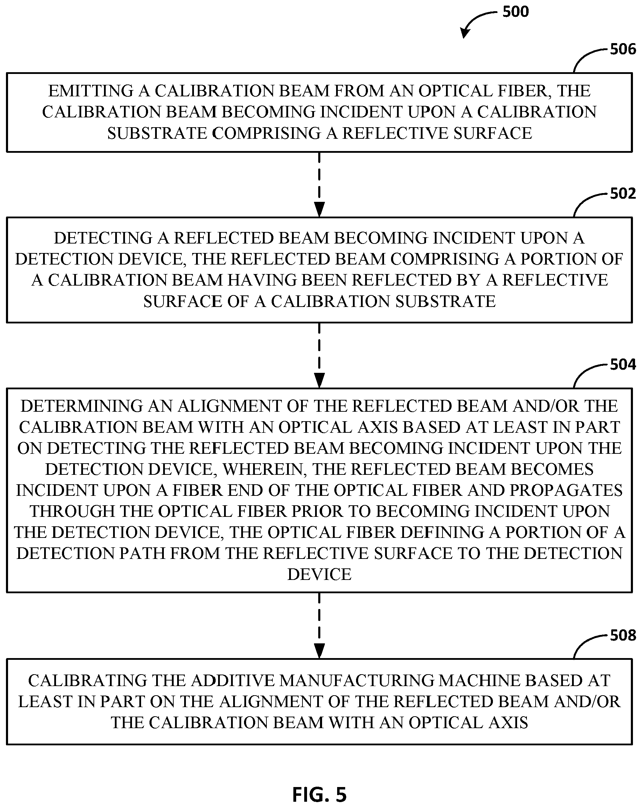

Now referring to FIG. 5, exemplary methods are described with reference to a flowchart 500. As shown, an exemplary method may include calibrating an additive manufacturing machine 102, such as calibrating an energy beam system 132 and/or an imaging system 154 of an additive manufacturing machine 102, and/or calibrating one or more components or aspects thereof. Additionally, or in the alternative, an exemplary method may include additively manufacturing a three-dimensional object 114 using the additive manufacturing machine 102, such as after having performed a calibration operation with respect thereto. As shown in FIG. 5, an exemplary method may include, at block 502 of the flowchart 500, detecting a reflected beam becoming incident upon a detection device. The reflected beam may include a portion of a calibration beam having been reflected by a reflective surface of a calibration substrate. At block 504 of the flowchart 500, the exemplary method may include determining an alignment of the reflected beam and/or the calibration beam with an optical axis based at least in part on detecting the reflected beam becoming incident upon the detection device. The reflected beam may become incident upon the fiber end of the optical fiber and may propagate through the optical fiber prior to becoming incident upon the detection device. The optical fiber may define a portion of a detection path from the reflective surface to the detection device.

In some embodiments, an exemplary method may include, at block 506 of the flowchart 500, emitting the calibration beam from the optical fiber. The calibration beam emitted from the optical fiber may become incident upon the calibration substrate that includes the reflective surface. Additionally, or in the alternative, in some embodiments, an exemplary method may include, at block 508 of the flowchart 500, performing a calibration operation with respect to the additive manufacturing machine based at least in part on the alignment of the reflected beam and/or the calibration beam with an optical axis. For example, the calibration operation may include adjusting a position of the deflecting element based at least in part on the alignment of the reflected beam and/or the calibration beam with an optical axis.

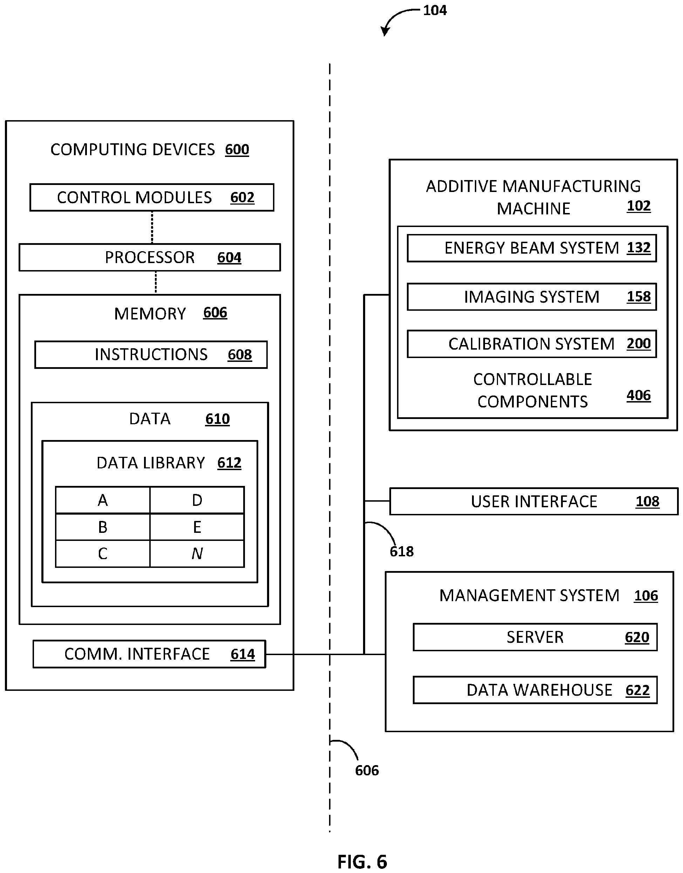

Now turning to FIG. 6, and exemplary control system 104 will be described. A control system 104 may perform one or more control operations associated with an additive manufacturing system 100 and/or an additive manufacturing machine 102. The control operations may include performing operations associated with the calibration system 200, the energy beam system 132, and/or the imaging system 154, such as the calibration operations described herein. Additionally, or in the alternative, the control operations may include operations associated with additively manufacturing three-dimensional objects 114.

As shown in FIG. 6, an exemplary control system 104 may include one or more computing devices 600. The one or more computing devices 600 may be communicatively coupled with an additive manufacturing machine 102 and/or additive manufacturing system 100. For example, a computing device 600 may be communicatively coupled with one or more controllable components 602 of an additive manufacturing machine 102, such as one or more controllable components 406 associated with an energy beam system 132, and/or an imaging system 154. Additionally, or in the alternative, a computing device 600 may be communicatively coupled with a management system 106 and/or a user interface 108. The one or more computing devices 600 may be located locally or remotely relative to the additive manufacturing machine 102.

The one or more computing devices 600 may include one or more control modules 604 configured to cause the computing device 600 to perform one or more control operations. The one or more control modules 604 may include one or more calibrations modules 400, such as described with reference to FIG. 4. The one or more control modules 604 may include control logic executable to provide control commands configured to perform control operations, such as calibration operations and/or operations associated with controlling one or more controllable components 406 of the additive manufacturing machine 102. Additionally, or in the alternative, the one or more control modules 604 and/or the one or more calibrations modules 400 may perform one or more methods described with reference to FIG. 5.

The one or more computing devices 600 may include one or more processors 606 and one or more memory devices 608. The one or more processors 606 may include any suitable processing device, such as a microprocessor, microcontroller, integrated circuit, logic device, and/or other suitable processing device. The one or more memory devices 608 may include one or more computer-readable media, including but not limited to non-transitory computer-readable media, RAM, ROM, hard drives, flash drives, and/or other memory devices 608. The one or more control modules 604 may be implemented at least in part by the one or more processors 606 and/or the one or more memory devices 608.

As used herein, the terms "processor" and "computer" and related terms, such as "processing device" and "computing device", are not limited to just those integrated circuits referred to in the art as a computer, but broadly refers to a microcontroller, a microcomputer, a programmable logic controller (PLC), an application specific integrated circuit, and other programmable circuits, and these terms are used interchangeably herein. A memory device 608 may include, but is not limited to, a non-transitory computer-readable medium, such as a random-access memory (RAM), and computer-readable nonvolatile media, such as hard drives, flash memory, and other memory devices. Alternatively, a floppy disk, a compact disc-read only memory (CD-ROM), a magneto-optical disk (MOD), and/or a digital versatile disc (DVD) may also be used.

As used herein, the term "non-transitory computer-readable medium" is intended to be representative of any tangible computer-based device implemented in any method or technology for short-term and long-term storage of information, such as, computer-readable instructions, data structures, program modules and submodules, or other data in any device. The methods described herein may be encoded as executable instructions embodied in a tangible, non-transitory, computer readable media, including, without limitation, a storage device and/or a memory device. Such instructions, when executed by a processor, cause the processor to perform at least a portion of the methods described herein. Moreover, as used herein, the term "non-transitory computer-readable medium" includes all tangible, computer-readable media, including, without limitation, non-transitory computer storage devices, including, without limitation, volatile and nonvolatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

The one or more memory devices 608 may store information accessible by the one or more processors 606, including computer-executable instructions 610 that can be executed by the one or more processors 606. The instructions 610 may include any set of instructions which when executed by the one or more processors 606 cause the one or more processors 606 to perform operations, including calibration operations, and/or additive manufacturing operations. For example, the instructions 610 may cause the one or more processors 606 to perform operations associated with a calibration module 400, such as described with reference to FIG. 4. Additionally, or in the alternative, the instructions 610 may cause the one or more processors 606 to perform one or more methods, such as described with reference to FIG. 5.

The memory devices 608 may store data 612 accessible by the one or more processors 606. The data 612 may include current or real-time data 612, past data 612, or a combination thereof. The data 612 may be stored in a data library 614. As examples, the data 612 may include data 612 associated with or generated by an additive manufacturing system 100 and/or an additive manufacturing machine 102, including data 612 associated with or generated by a computing device 600, an additive manufacturing machine 102, a management system 106, and/or a user interface 108. By way of example, the data 612 may include calibration data 402, inputs to the calibration module 400, and/or calibration commands 404. The data 612 may also include other data sets, parameters, outputs, information, associated with an additive manufacturing system 100 and/or an additive manufacturing machine 102.

The one or more computing devices 600 may also include a communication interface 616 configured to communicate with various nodes on a communication network 618 via wired or wireless communication lines 620. The communication interface 616 may include any suitable components for interfacing with one or more network(s), including for example, transmitters, receivers, ports, controllers, antennas, and/or other suitable components. The communication interface 616 may allow the one or more computing devices 600 to communicate with various nodes associated with the additive manufacturing machine 102, the management system 106, and/or a user interface 108. The communication network 618 may include, for example, a local area network (LAN), a wide area network (WAN), SATCOM network, VHF network, a HF network, a Wi-Fi network, a WiMAX network, a gatelink network, and/or any other suitable communication network 618 for transmitting messages to and/or from the computing device 600 across the communication lines 620. The communication lines 620 of communication network 618 may include a data bus or a combination of wired and/or wireless communication links.

The management system 106 may include a server 622 and/or a data warehouse 624. As an example, at least a portion of the data 612 may be stored in the data warehouse 624, and the server 622 may transmit data 612 from the data warehouse 624 to the one or more computing device 600, and/or receive data 612 from the one or more computing devices 600 and to store the received data 612 in the data warehouse 624 for further purposes. The server 622 and/or the data warehouse 624 may be implemented as part of the one or more computing devices 600 and/or as part of the management system 106.

Accordingly, the presently disclosed systems and methods may provide for improved alignment of an energy beam system. Additionally, or in the alternative, presently disclosed systems and methods may provide for improved material properties of additively manufactured three-dimensional objects, for example, as a result of improved alignment of the energy beam system.

Further aspects of the presently disclosed subject matter are provided by the following clauses:

A method of calibrating an additive manufacturing machine, the method comprising detecting a reflected beam becoming incident upon a detection device, the reflected beam comprising a portion of a calibration beam having been reflected by a reflective surface of a calibration substrate; and determining an alignment of the reflected beam and/or the calibration beam with an optical axis based at least in part on detecting the reflected beam becoming incident upon the detection device; wherein, the reflected beam becomes incident upon a fiber end of an optical fiber and propagates through the optical fiber prior to becoming incident upon the detection device, the optical fiber defining a portion of a detection path from the reflective surface to the detection device.

The method of any clause herein, comprising emitting the calibration beam from the optical fiber, the calibration beam becoming incident upon the calibration substrate comprising the reflective surface.

The method of any clause herein, comprising performing a calibration operation with respect to the calibration operation based at least in part on the alignment of the reflected beam and/or the calibration beam with the optical axis.

The method of any clause herein, wherein the calibration operation comprises adjusting a position of a deflecting element, the deflecting element disposed between the optical fiber and the reflective surface.

The method of any clause herein, wherein adjusting the position of the deflecting element comprises compensating for a misalignment of the reflected beam and/or the calibration beam with respect to the optical axis.

The method of any clause herein, wherein the optical fiber comprises a single-mode optical fiber.

The method of any clause herein, comprising directing the calibration beam onto the reflective surface with a deflecting element, the deflecting element disposed between the optical fiber and the reflective surface.

The method of any clause herein, wherein the deflecting element defines a portion of a scanner used to direct an energy beam onto a powder bed when consolidating the powder bed to form an additively manufactured three-dimensional obj ect.

The method of any clause herein, comprising moving the deflecting element to a position that causes the reflected beam to become incident upon the fiber end of the optical fiber.

The method of any clause herein, comprising orienting the deflecting element to a plurality of positions and emitting the calibration beam from the optical fiber for respective ones of the plurality of positions; and detecting the reflected beam becoming incident upon the detection device for at least one of the plurality of positions.

The method of any clause herein, comprising determining whether the reflected beam becomes incident upon the detection device for respective ones of the plurality of positions.

The method of any clause herein, comprising determining an intensity of a signal from the detection device for respective ones of the plurality of positions; and determining the alignment of the reflected beam and/or the calibration beam with the optical axis based at least in part on the intensity of the signal from the detection device for the respective ones of the plurality of positions.

The method of any clause herein, comprising determining the alignment of the reflected beam and/or the calibration beam with the optical axis based at least in part on a weighted centroid corresponding to a plurality of data points for the signal from the detection device.

The method of any clause herein, comprising determining the weighted centroid based at least in part on an expression comprising $\bar{a} = \frac{\sum a_i v_i}{\sum v_i}$, wherein ($a_i$) represents a position of the deflecting element, ($v_i$) represents a value corresponding to the signal from the detection device, and ($\bar{a}$) represents a mean coordinate of the position of the deflecting element weighted by the signal from the detection device.

The method of any clause herein, wherein the detection path comprises a beam splitter disposed between at least one of the optical fiber and the detection device, or the reflective surface and the optical fiber.

The method of any clause herein, wherein the calibration substrate comprises one of a powder bed; an object formed by consolidating the powder bed with an energy beam; a build platform; a build plate; or a calibration plate.

The method of any clause herein, wherein the fiber end defines a virtual aperture, and wherein a portion of the reflected beam that passes through the virtual aperture 306 becomes incident upon the fiber end, propagates through the optical fiber, and becomes incident upon the detection device.

The method of any clause herein, wherein the detection device comprises a photo diode.

A computer-readable medium comprising computer-executable instructions, which when executed by a processor associated with an additive manufacturing machine, causes the processor to perform a method comprising detecting a reflected beam becoming incident upon a detection device, the reflected beam comprising a portion of a calibration beam having been reflected by a reflective surface of a calibration substrate; and determining an alignment of the reflected beam and/or the calibration beam with an optical axis based at least in part on detecting the reflected beam becoming incident upon the detection device; wherein, the reflected beam becomes incident upon a fiber end of an optical fiber and propagates through the optical fiber prior to becoming incident upon the detection device, the optical fiber defining a portion of a detection path from the reflective surface to the detection device.

An additive manufacturing system for additively manufacturing three-dimensional objects, the additive manufacturing system comprising an optical fiber configured to emit a calibration beam, the optical fiber comprising a fiber end; a calibration substrate comprising a reflective surface; a detection device configured to detect a reflected beam comprising a portion of the calibration beam having been reflected by the reflective surface, the optical fiber defining a portion of a detection path from the reflective surface to the detection device; and a controller configured to cause the additive manufacturing machine to perform a calibration operation comprising detecting the reflected beam becoming incident upon the detection device; and determining an alignment of the reflected beam and/or the calibration beam with an optical axis based at least in part on detecting the reflected beam becoming incident upon the detection device.

This written description uses examples to describe the presently disclosed subject matter, including the best mode, and also to enable any person skilled in the art to practice such subject matter, including making and using any devices or systems and performing any incorporated methods. The patentable scope of the presently disclosed subject matter is defined by the claims, and may include other examples that occur to those skilled in the art. The scope of the claims encompasses such other examples that include structural elements that do not differ from the literal language of the claims or that have insubstantial differences from the literal languages of the claims.

**Claims**

1. A method (500) of calibrating an additive manufacturing machine (102), the method (500) comprising:

   detecting a reflected beam (218) becoming incident upon a detection device (206), the reflected beam (218) comprising a portion of a calibration beam (208) having been reflected by a reflective surface (216) of a calibration substrate (214); and
   determining an alignment of the reflected beam (218) and/or the calibration beam (208) with an optical axis (300) based at least in part on detecting the reflected beam (218) becoming incident upon the detection device (206);
   wherein, the reflected beam (218) becomes incident upon a fiber end (207) of an optical fiber (204) and propagates through the optical fiber (204) prior to becoming incident upon the detection device (206), the optical fiber (204) defining a portion of a detection path (222) from the reflective surface (216) to the detection device (206).

2. The method (500) of claim 1, comprising:
   emitting the calibration beam (208) from the optical fiber (204), the calibration beam (208) becoming incident upon the calibration substrate (214) comprising the reflective surface (216).

3. The method (500) according to any of the preceding claims, comprising:
   performing a calibration operation with respect to the calibration operation based at least in part on the alignment of the reflected beam (218) and/or the calibration beam (208) with the optical axis (300).

4. The method (500) of claim 3, wherein the calibration operation comprises:
   adjusting a position of a deflecting element (212), the deflecting element (212) disposed between the optical fiber (204) and the reflective surface (216).

5. The method (500) of claim 4, wherein adjusting the position of the deflecting element (212) comprises compensating for a misalignment of the reflected beam (218) and/or the calibration beam (208) with respect to the optical axis (300).

6. The method (500) according to any of the preceding claims, wherein the optical fiber (204) comprises a single-mode optical fiber.

7. The method (500) according to any of the preceding claims, comprising:
   directing the calibration beam (208) onto the reflective surface (216) with a deflecting element (212), the deflecting element (212) disposed between the optical fiber (204) and the reflective surface (216).

8. The method (500) of claim 7, wherein the deflecting element (212) defines a portion of a scanner (144) used to direct an energy beam (134) onto a powder bed (136) when consolidating the powder bed (136) to form an additively manufactured three-dimensional object (114).

9. The method (500) according to any of claims 7-8, comprising:
moving the deflecting element (212) to a position that causes the reflected beam (218) to become incident upon the fiber end (207) of the optical fiber (204).

10. The method (500) according to any of claims 7-9, comprising:

orienting the deflecting element (212) to a plurality of positions and emitting the calibration beam (208) from the optical fiber (204) for respective ones of the plurality of positions; and detecting the reflected beam (218) becoming incident upon the detection device (206) for at least one of the plurality of positions.

11. The method (500) of claim 10, comprising:
determining whether the reflected beam (218) becomes incident upon the detection device (206) for respective ones of the plurality of positions.

12. The method (500) of claim 10, comprising:

determining an intensity of a signal from the detection device (206) for respective ones of the plurality of positions;
and determining the alignment of the reflected beam (218) and/or the calibration beam (208) with the optical axis based at least in part on the intensity of the signal from the detection device (206) for the respective ones of the plurality of positions.

13. The method (500) of claim 12, comprising:
determining the alignment of the reflected beam (218) and/or the calibration beam (208) with the optical axis based at least in part on a weighted centroid corresponding to a plurality of data points for the signal from the detection device (206).

14. The method (500) of claim 13, comprising:
determining the weighted centroid based at least in

$$\bar{a} = \frac{\sum a_i v_i}{\sum v_i}$$

part on an expression comprising , wherein ($a_i$) represents a position of the deflecting element, ($v_i$) represents a value corresponding to the signal from the detection device (206), and ($\bar{a}$) represents a mean coordinate of the position of the deflecting element (212) weighted by the signal from the detection device (206).

15. A three-dimensional object (114) manufactured from the method (500) of any of the preceding claims.

FIG. 1

**FIG. 2A**

EP 4 400 234 A1

FIG. 2B

FIG. 3A

FIG. 3B

104

400

**CALIBRATION MODULE**

202, 140

LIGHT SOURCE

212, 144

DEFLECTING ELEMENT

206, 224

DETECTION DEVICE

SCANNING MODULE    **408**

MAPPING MODULE    **410**

DETERMINING MODULE    **412**

COMMAND MODULE    **414**

404

CALIBRATION COMMANDS

406

CONTROLLABLE COMPONENTS

402

CALIBRATION DATA

INTENSITY TABLE

| POSITION | VALUE |
|----------|-------|
| (X1,Y1) | 0 |
| (X2,Y2) | 8 |
| (X3,Y3) | 10 |
| (X4,Y4) | 6 |
| (X2,Y2) | 4 |
| (X3,Y3) | 0 |

INTENSITY MAP

Y

(Xn,Yn)

420

420

X

416

418

**FIG. 4**

500

506

EMITTING A CALIBRATION BEAM FROM AN OPTICAL FIBER, THE CALIBRATION BEAM BECOMING INCIDENT UPON A CALIBRATION SUBSTRATE COMPRISING A REFLECTIVE SURFACE

502

DETECTING A REFLECTED BEAM BECOMING INCIDENT UPON A DETECTION DEVICE, THE REFLECTED BEAM COMPRISING A PORTION OF A CALIBRATION BEAM HAVING BEEN REFLECTED BY A REFLECTIVE SURFACE OF A CALIBRATION SUBSTRATE

504

DETERMINING AN ALIGNMENT OF THE REFLECTED BEAM AND/OR THE CALIBRATION BEAM WITH AN OPTICAL AXIS BASED AT LEAST IN PART ON DETECTING THE REFLECTED BEAM BECOMING INCIDENT UPON THE DETECTION DEVICE, WHEREIN, THE REFLECTED BEAM BECOMES INCIDENT UPON A FIBER END OF THE OPTICAL FIBER AND PROPAGATES THROUGH THE OPTICAL FIBER PRIOR TO BECOMING INCIDENT UPON THE DETECTION DEVICE, THE OPTICAL FIBER DEFINING A PORTION OF A DETECTION PATH FROM THE REFLECTIVE SURFACE TO THE DETECTION DEVICE

508

CALIBRATING THE ADDITIVE MANUFACTURING MACHINE BASED AT LEAST IN PART ON THE ALIGNMENT OF THE REFLECTED BEAM AND/OR THE CALIBRATION BEAM WITH AN OPTICAL AXIS

FIG. 5

COMPUTING DEVICES **600**

CONTROL MODULES **602**

PROCESSOR **604**

MEMORY **606**

INSTRUCTIONS **608**

DATA **610**

DATA LIBRARY **612**

| A | D |
|---|---|
| B | E |
| C | N |

COMM. INTERFACE **614**

ADDITIVE MANUFACTURING MACHINE **102**

ENERGY BEAM SYSTEM **132**

IMAGING SYSTEM **158**

CALIBRATION SYSTEM **200**

CONTROLLABLE COMPONENTS **406**

USER INTERFACE **108**

618

MANAGEMENT SYSTEM **106**

SERVER **620**

DATA WAREHOUSE **622**

606

104

**FIG. 6**

Europäisches
Patentamt

European
Patent Office

Office européen
des brevets

# EUROPEAN SEARCH REPORT

**Application Number**

EP 23 21 0824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 050 518 A1 (IPG PHOTONICS CORP [US]) 26 July 2018 (2018-07-26) <br> * page 22, line 7 - line 10 * <br> * page 40, line 8 - line 10 * <br> * figure 3 * <br> * figure 5 * <br> * page 41, line 7 * | 1-15 | INV. <br> B22F10/28 <br> B29C64/00 <br> B22F10/31 <br> B22F12/44 <br> B22F12/90 <br> B23K26/34 <br> B29C64/153 |
| X | US 2018/186067 A1 (BULLER BENYAMIN [US] ET AL) 5 July 2018 (2018-07-05) | 1,3-9 | B33Y10/00 <br> B33Y50/02 <br> B33Y80/00 |
| A | * paragraph [0237] * <br> * paragraph [0293] * <br> * paragraph [0012] * <br> * paragraph [0298] * <br> * paragraph [0226] * <br> * figure 13 * <br> * paragraph [0232] * | 2 | |
| X | DE 10 2019 116214 A1 (FRAUNHOFER GES FORSCHUNG [DE]) 17 December 2020 (2020-12-17) | 1-9,15 | |
| A | * paragraph [0001] * <br> * paragraph [0059] * <br> * figures 2,6 * <br> * claim 1 * | 10-14 | **TECHNICAL FIELDS SEARCHED (IPC)** <br><br> B22F <br> B33Y <br> B29C <br> B23K |
| X | US 2018/154443 A1 (MILSHTEIN EREL [US] ET AL) 7 June 2018 (2018-06-07) | 1,3-9,15 | |
| A | * paragraph [0002] * <br> * paragraph [0213] * <br> * paragraph [0218]; figure 11 * <br> * paragraph [0234] * <br> * paragraph [0219] * | 2,10 | |

The present search report has been drawn up for all claims

| Place of search | Date of completion of the search | Examiner |
|---|---|---|
| The Hague | 24 May 2024 | Mensink, Rob |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 23 21 0824

24-05-2024

| Patent document cited in search report | Publication date | Patent family member(s) | | Publication date |
|---|---|---|---|---|
| CA 3050518 A1 | 26-07-2018 | CA | 3050518 A1 | 26-07-2018 |
| | | CN | 110446580 A | 12-11-2019 |
| | | EP | 3571003 A1 | 27-11-2019 |
| | | JP | 7436208 B2 | 21-02-2024 |
| | | JP | 2020514067 A | 21-05-2020 |
| | | KR | 20190109445 A | 25-09-2019 |
| | | RU | 2019122333 A | 19-02-2021 |
| | | WO | 2018136622 A1 | 26-07-2018 |
| US 2018186067 A1 | 05-07-2018 | US | 2018186067 A1 | 05-07-2018 |
| | | US | 2018186080 A1 | 05-07-2018 |
| | | US | 2018186081 A1 | 05-07-2018 |
| | | US | 2018186082 A1 | 05-07-2018 |
| | | US | 2024059019 A1 | 22-02-2024 |
| | | WO | 2018129089 A1 | 12-07-2018 |
| DE 102019116214 A1 | 17-12-2020 | DE | 102019116214 A1 | 17-12-2020 |
| | | WO | 2020249460 A1 | 17-12-2020 |
| US 2018154443 A1 | 07-06-2018 | US | 2018154442 A1 | 07-06-2018 |
| | | US | 2018154443 A1 | 07-06-2018 |
| | | US | 2024058868 A1 | 22-02-2024 |
| | | WO | 2018106586 A1 | 14-06-2018 |

EPO FORM P0459

For more details about this annex : see Official Journal of the European Patent Office, No. 12/82